# EUROPÄISCHE PATENTSCHRIFT

(11) **EP 1 238 527 B1**
(45) Veröffentlichungstag und Bekanntmachung des Hinweises auf die Patenterteilung: **14.09.2011**
(21) Anmeldenummer: 00990722.1
(22) Anmeldetag: 12.12.2000
(51) Int. Cl.: H04M 7/00

(54) **WAHLWEISER VERBINDUNGSAUFBAU ÜBER EIN FERNSPRECHNETZ ODER ÜBER DAS INTERNET**
ESTABLISHMENT OF A CONNECTION, ALTERNATELY VIA A TELEPHONE NETWORK OR THE INTERNET
ETABLISSEMENT OPTIONNEL D'UNE LIAISON PAR UN RESEAU TELEPHONIQUE OU UN RESEAU INTERNET

(30) Priorität: 15.12.1999 EP 99125058
(43) Veröffentlichungstag der Anmeldung: 11.09.2002
(73) Patentinhaber: Nokia Siemens Networks GmbH & Co. KG, 81541 München (DE)
(72) Erfinder: SACHSENWEGER, Doris, 81373 München (DE); VIZAEI, Mohammad, A-1220 Wien (AT); LEIS, Peter, 82377 Penzberg (DE)
(86) Internationale Anmeldenummer: PCT/EP2000/012606
(87) Internationale Veröffentlichungsnummer: WO 2001/045373

(56) Entgegenhaltungen:
- EP-A- 0 926 867
- WO-A-97/47118
- WO-A-99/14924
- CA-A- 2 249 821
- SCHOEN U ET AL: "CONVERGENCE BETWEEN PUBLIC SWITCHING AND THE INTERNET" PROCEEDINGS OF THE ISS'97 INTERNATIONAL SWITCHING SYMPOSIUM, TORONTO, ONTARIO, KANADA, 21-26 SEPTEMBER 1997, Seiten 549-560, XP000720563

## Beschreibung

Die Erfindung betrifft ein Verfahren zum Verbindungsaufbau, bei dem eine Vermittlungseinrichtung in einem ersten übertragungsnetz gemäß einer ersten Übertragungsart übertragene Daten zwischen Teilnehmern vermittelt. An die Vermittlungseinrichtung ist ein erstes Endgerät über eine Anschlußstrecke angeschlossen. Über dieselbe Anschlußstrecke ist ein zweites Endgerät angeschlossen, mit welchem Daten gemäß einer von der ersten Übertragungsart abweichenden z5eiten Übertragungsart in einem zweiten Datenübertragungsnetz übertragen werden.

Das eine Übertragungsnetz ist beispielsweise ein Fernsprechnetz zur Übertragung analoger oder digitaler Sprachdaten in Sprachkanälen, wie sie aus dem öffentlichen Telefonnetz bekannt ist. Es werden jedoch auch Übertragungsnetze verwendet, in denen die zu übertragenden Daten in Datenpaketen übertragen werden. Ein Beispiel für ein solches Übertragungsnetz ist das Internet, in welchem Sprachdaten in Datenpaketen nach einem Protokoll übertragen werden, das englisch auch als Voice over Internet Protocol bezeichnet wird, abgekürzt VoIP.

Als Anschlußstrecke für das erste Endgerät und das zweite Endgerät dienen beispielsweise Kupferdoppeladern des Fernsprechnetzes. Für die breitbandige Datenübertragung auf Kupferdoppeladern gibt es verschiedene Techniken, die unter dem Oberbegriff xDSL-Techniken (x Digital Subscriber Line) zusammengefaßt werden. So gibt es die HDSL (High Bitrate Digital Subscriber Line), die ADSL (Asymmetrical Digital Subscriber Line) und die VDSL (Very High Bitrate Digital Subscriber Line). Speziell für Internet-Anwendungen wurde der Standard Universal ADSL festgelegt, abgekürzt UADSL oder UDSL. Bei dieser Technik lässt sich ein Personalcomputer direkt an die Kupferdoppelader ohne den Einsatz eines sogenannten Splitter einsetzen. Die Übermittlungsgeschwindigkeiten liegen bei 1,5 Megabit/Sekunde.

Aus dem Dokument WO 99/14924 ist ein System bekannt, bei dem ein Teilnehmer eine Übertragungsstrecke zu einer Vermittlungsstelle wahlweise zum Übertragen von Daten zu einem Internet oder zum Übertragen von Daten zu einem öffentlichen Telefonnetz nutzt. Während der Verbindung zum Internet ist der Teilnehmer nicht über das öffentliche Telefonnetz erreichbar, da die Übertragungsstrecke zwischen der Vermittlungsstelle und seinem Teilnehmeranschluss durch die Internetverbindung belegt ist. Mit Hilfe des in dem Dokument WO 99/14924 beschriebenen Systems ist es möglich, den gerufenen Teilnehmer über einen im öffentlichen Telefonnetz an ihn gerichteten Ruf eines rufenden Teilnehmers durch Übermitteln von Daten zusätzlich zu den Internetdaten zu informieren. Der gerufene Teilnehmer hat dann die Möglichkeit, eine Verbindung zum rufenden Teilnehmer aufzubauen.

Aus dem Dokument EP 0 926 867 A2 ist eine Möglichkeit bekannt, einen gerufenen Teilnehmer über einen Ruf eines rufenden Teilnehmers in einem öffentlichen Telefonnetz zu informieren, wenn der gerufene Teilnehmer die einzige Übertragungsstrecke zur Übertragung von Daten zu einem Internet nutzt. Dem gerufenen Teilnehmer werden von einer Vermittlungsstelle, zu der eine Internetverbindung besteht, weitere Daten übertragen, die Informationen über den Ruf des rufenden Teilnehmers enthalten. Der gerufene Teilnehmer hat dann die Möglichkeit, den Ruf des rufenden Teilnehmers anzunehmen oder abzuweisen.

Aus dem Dokument XP-000720563, "Convergence between public switching and the internet", Dr. U. Schoen, J. Hamann, A. Jugel, Dr. H. Kurzawa, C. Schmidt; Siemens AG - Germany, ist bekannt, Breitbandübertragungsstrecken zur Übertragung von Daten zu einem Teilnehmer zu nutzen. Durch diese Breitbandübertragungsstrecken ist es möglich, große Datenmengen zwischen einer Vermittlungseinrichtung und den Teilnehmerendgeräten zu übertragen. Insbesondere ist dies vorteilhaft, um die großen Datenmengen, die bei Internetverbindungen üblicherweise übertragen werden sollen, in vertretbarer Zeit zu übertragen. Dabei werden in diesem Dokument Möglichkeiten aufgezeigt, wie vorhandene Netzelemente eines öffentlichen Telefonnetzes aufgerüstet werden können, um eine höhere Datenübertragung von Internetdaten zu erreichen.

Es ist Aufgabe der Erfindung, für den Betrieb zweier Endgeräte verschiedene Übertragungsnetze an einer Anschlussstrecke ein einfaches Verfahrens anzugeben, das die Nutzung zusätzlicher Leistungsfunktionen ermöglicht. In diesem Zusammenhang sollen auch eine Vermittlungseinrichtung und ein zugehöriges Programm angegeben werden.

Die das Verfahren betreffende Aufgabe wird durch ein Verfahren mit den im Patentanspruch 1 angegebenen Verfahrensschritten gelöst. Weiterbildungen sind in den Unteransprüchen angegeben.

Die Erfindung geht von der Überlegung aus, dass ein gerufener Teilnehmer oft über zwei Übertragungsnetze gleichzeitig erreichbar ist. Wie bei den oben erwähnten xDSL-Techniken werden zwei Übertragungsnetze verwendet, um die Vorteile beider Übertragungsnetze nutzen zu können. Zwei Übertragungsnetze bestehen beispielsweise auch in einer Übergangsphase von der Nutzung des einen Übertragungsnetzes zur Nutzung des anderen Übertragungsnetzes gemeinsam nebeneinander. Die Tatsache, dass derselbe Teilnehmer gleichzeitig über zwei Endgeräte erreichbar ist, bietet die Möglichkeit, dem Teilnehmer neue Leistungsfunktionen anzubieten und/oder die Erreichbarkeit des Teilnehmers weiter zu erhöhen.

Beim erfindungsgemäßen Verfahren ermittelt eine Steuereinheit der Vermittlungseinrichtung beim Bearbeiten einer Anforderung für den Verbindungsaufbau zum ersten Endgerät ein Verbindungsziel, über welches das zweite Endgerät im zweiten Übertragungsnetz erreichbar ist. Beim Bearbeiten der Anforderung wird mit Hilfe des Verbindungsziels eine Verbindung zum zweiten Endgerät aufgebaut. Durch die Einbeziehung des zweiten Endgerätes in die Bearbeitung einer Anforderung, die eigentlich für das erste Endgerät erzeugt worden ist, läßt sich die Anforderung netzübergreifend bearbeiten. So wird das zweite Endgerät beispielsweise einbezogen, wenn das erste Endgerät besetzt oder in seiner Funktion gestört ist. Dadurch erhöht sich die Erreichbarkeit des Teilnehmers, dem die beiden über dieselbe Anschlußstrecke angeschlossenen Endgeräte gehören. Beim Bearbeiten der Anforderung gibt es im Vergleich zur Bearbeitung der Anforderung in nur einem Datenübertragungsnetz eine zusätzliche Übertragungsmöglichkeit. Die zusätzliche Übertragungsmöglichkeit kann alternativ oder zusätzlich zu der bereits bisher benutzten Übertragungsmöglichkeit eingesetzt werden.

Dem Anrufer bleibt das erfindungsgemäße Verfahren verborgen. In das erfindungsgemäße Verfahren wird nur die sogenannte Ziel-Vermittlungseinrichtung auf der Seite des gerufenen Teilnehmers einbezogen. Protokolle zur Übertragung von Signalisierungsnachrichten zwischen den Ermittlungseinrichtungen müssen demzufolge nicht geändert werden. Auch sind keine zusätzlichen Nachrichten zwischen den Vermittlungseinrichtungen zu senden.

Das erfindungsgemäße Verfahren wird für unterschiedliche Übertragungsdienste eingesetzt, z. B. für die Sprachdatenübertragung, fur die Übertragung von Faxsimilidaten oder die Übertragung von Anwenderdateien. Ist beispielsweise ein Telefongerät des gerufenen Teilnehmers besetzt, so läßt sich mit Hilfe der erfindungsgemäßen Verfahrens über das Internet dennoch einer weitere Verbindung zum Teilnehmer aufbauen. Ebenso kann bei einem besetzten Faxgerät ein Diensterbringungsrechner (Server) einbezogen werden, der das ankommende Fax dennoch für den Teilnehmer entgegennimmt.

Bei einer Weiterbildung wird mit Hilfe der Verbindung zum zweiten Endgerät eine Anfrage gestellt, ob eine Verbindung und/oder über welches Übertragungsnetz die Verbindung aufgebaut werden soll. Hat das zweite Endgerät beispielsweise bessere Darstellungsmöglichkeiten für die Anfrage als das erste Endgerät, so läßt sich die Anfrage auf eine benutzerfreundlichere Art stellen als bei der Nutzung des ersten Endgerätes für die Anfrage. So sind Telefone beispielsweise aufgrund der Vielzahl von Funktionstasten unübersichtlich in ihrer Bedienung. Dagegen läßt sich auf dem Bildschirm eines Computers eine Anfrage in einer Dialogbox auf einfache Art darstellen.

Bei einer anderen Weiterbildung wird mit Hilfe der Verbindung zum zweiten Endgerät eine Verbindung zu dem Endgerät aufgebaut, das die Anforderung erzeugt hat. Dies setzt voraus, daß das zweite Endgerät für die Bearbeitung des Dienstes geeignet ist, der durch die Anforderung betroffen ist. Eine Sprachverbindung zu einem entfernten Teilnehmer läßt sich beispielsweise sowohl über das Telefonnetz als auch unter Einbeziehung des Internets aufbauen.

Bei einer nächsten Weiterbildung prüft die Steuereinheit zunächst, ob eine Bedingung für die Einbeziehung des zweiten Endgeräts erfüllt ist. Die Verbindung zum zweiten Endgerät wird nur dann aufgebaut, wenn die Bedingung erfüllt ist. Beispielsweise wird der Belegungszustand des ersten Endgeräts abgefragt. Nur wenn dieses Endgerät besetzt ist, wird das zweite Endgerät in die Bearbeitung der Anforderung einbezogen. Angewendet werden auch Verfahren, bei denen die Steuereinheit das zweite Endgerät einbezieht, wenn sich der Teilnehmer am ersten Endgerät nicht meldet. Obwohl erstes Endgerät und zweites Endgerät an derselben Anschlußstrecke und damit örtlich nah beieinander angeordnet sind, kann es Situationen geben, in denen sich der Teilnehmer am ersten Endgerät nicht meldet, jedoch am zweiten Endgerät einen Verbindungsaufbau wünscht. Ein solcher Fall ist beispielsweise ein defektes erstes Endgerät.

Bei einer Weiterbildung des erfindungsgemäßen Verfahrens ist das eine Übertragungsnetz ein durchschaltevermittelndes Übertragungsnetz zur Sprachübertragung, z.B. das digitale ISDN-Netz (Integrated Services Network) mit analogen und digitalen Endgeräten. Das andere Übertragungsnetz ist ein Netz, z. B. das Internet oder ein Intranet, in welchem Daten in Datenpaketen übertragen werden. Das Übertragungsnetz wird entweder beim Bearbeiten einer Anforderung im durchschaltevermittelnden Übertragungsnetz oder beim Bearbeiten einer Anforderung im Datenpakete vermittelnden Übertragungsnetz gewechselt. Oft gibt es bei den Teilnehmern einen Telefonnetzanschluß und einen Internetanschluß.

Das erfindungsgemäße Verfahren oder seine Weiterbildungen werden insbesondere bei Anschlußstrecken eingesetzt, auf denen Daten gemäß xDSL-Techniken übertragen werden, insbesondere bei Verfahren unter Verwendung der UADSL-Technik. Die große Anzahl solcher Anschlußstrecken rechtfertigt den Aufwand in der Vermittlungseinrichtung für die Durchführung des Verfahrens.

Die oben angegebene Aufgabe wird außerdem durch eine Vermittlungseinrichtung mit den im Patentanspruch 7 angegebenen Merkmalen gelöst. Die erfindungsgemäße Vermittlungseinrichtung enthält eine erste Anschlußeinheit zum Anschluß an das erste Übertragungsnetz sowie eine zweite Anschlußeinheit zum Anschluß des ersten Endgerätes des Teilnehmers. Weiterhin enthält die Vermittlungseinrichtung eine Steuereinheit, welche die durch das erfindungsgemäße Verfahren oder dessen Weiterbildungen festgelegten Verfahrensschritte ausführt. Damit gelten die oben genannten technischen Wirkungen auch für die Vermittlungseinrichtung.

Bei einer Weiterbildung der erfindungsgemäßen Vermittlungseinrichtung wird die zweite Anschlußeinheit außerdem zum Anschluß des zweiten Endgerätes verwendet. Die gemeinsame Anschlußstrecke für das erste Endgerät und das zweite Endgerät führt bis zur Vermittlungseinrichtung. Innerhalb der Anschlußeinheit werden die das erste Endgerät bzw. das zweite Endgerät betreffenden Daten beispielsweise mit Hilfe einer Frequenzweiche voneinander getrennt, wie es durch die oben erwähnte UADSL-Technik bekannt ist.

Die Vermittlungseinrichtung enthält bei einer Ausgestaltung außerdem eine Netzübergangseinheit, die das erste Datenübertragungsnetz und das zweite Übertragungsnetz verbindet. Zur Ansteuerung der Netzübergangseinheit läßt sich ein für die Vermittlungseinrichtung festgelegtes Protokoll verwenden. Es wird somit nur über eine kleine Entfernung signalisiert.

Enthält die Vermittlungseinrichtung auch eine Netzzugangseinheit für den Zugang vom zweiten Endgerät zum zweiten Übertragungsnetz, so kann auch für die Signalisierung zwischen Netzzugangseinheit und Vermittlungseinrichtung ein für die Vermittlungseinrichtung festgelegtes Protokoll genutzt werden. Dadurch läßt sich der Aufbau der erfindungsgemäßen Vermittlungseinrichtung vereinfachen.

Die Erfindung betrifft außerdem ein Programm für den Verbindungsaufbau, bei dessen Ausführung die oben genannten Verfahrensschritte des erfindungsgemäßen Verfahrens bzw. dessen Weiterbildungen ausgeführt werden. Somit gelten die oben angegebenen technischen Wirkungen auch für dieses Programm.

Bei einem weiteren durch die Erfindung betroffenen Programm für eine Datenverarbeitungsanlage, wird die Datenverarbeitungsanlage veranlaßt, eine Abfrage auszugeben, mit der eine Bedienperson aufgefordert wird, eine an die Datenverarbeitungsanlage gerichtete Anforderung zum Verbindungsaufbau über ein erstes Übertragungsnetz oder über ein zweites Übertragungsnetz aufzubauen. Die Aufforderung erfolgt beispielsweise über eine Anzeigeeinheit oder akustisch. Beim Ausführen des erfindungsgemäßen Programms erhält die Bedienperson die Möglichkeit, vor dem Verbindungsaufbau zu entscheiden, ob das zweite Übertragungsnetz benutzt werden soll. Ungewollte Störungen der Bedienperson durch einen zweiten Verbindungsaufbau können so vermieden werden. Andererseits erhöht sich die Erreichbarkeit der Bedienperson.

Im folgenden werden Ausführungsbeispiele der Erfindung anhand der beiliegenden Zeichnungen erläutert. Darin zeigen:
Figur 1 den Aufbau einer Vermittlungsstelle,
Figur 2 eine Dialogbox zur wahlweisen Annahme eines Rufes, und
Figuren 3A und 3B ein Flußdiagramm für ein Verfahren zur wahlweisen Rufannahme.

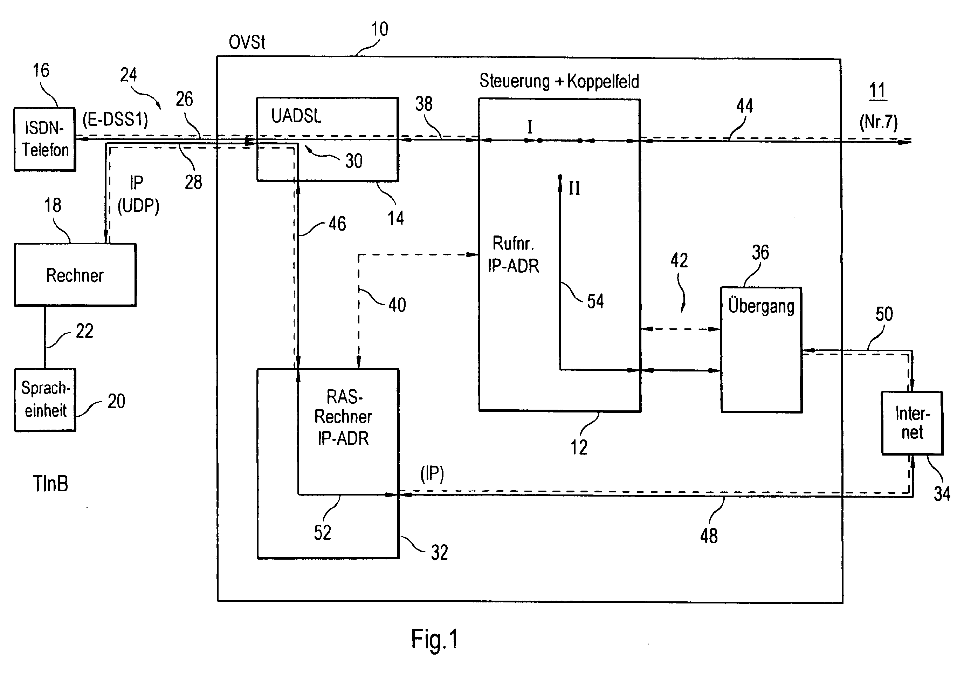

Figur 1 zeigt den Aufbau einer Orts-Vermittlungsstelle 10, wie sie z. B. im Fernsprechnetz 11 der TELEKOM AG eingesetzt wird. Die Vermittlungsstelle 10 enthält eine Steuer- und Vermittlungseinheit 12, die den Verbindungsaufbau bzw. Verbindungsabbau steuert sowie in einem nicht dargestellten Koppelfeld Verbindungen zwischen Sprachkanälen schaltet.

Eine Anschlußbaugruppe 14 der Vermittlungsstelle 10 dient zum Anschluß von Teilnehmer-Endgeräten, von denen in Figur 1 zwei Endgeräte 16, 18 desselben Teilnehmers TlnB dargestellt sind. Das Endgerät 16 ist ein ISDN-Telefon (Integrated Systems Digital Network). Bei einem anderen Ausführungsbeispiel wird ein mit analoger Technik arbeitendes Telefon eingesetzt. Das Endgerät 18 ist ein Arbeitsplatz-Rechner, auf dem Anwendungsprogramme ausgeführt werden, z. B. ein Buchhaltungsprogramm und ein Programm zur Internet-Telefonie. Beispielsweise wird das Programm "Netmeeting" der Firma Microsoft GmbH zur Internet-Telefonie verwendet. An den Rechner 18 ist eine Spracheinheit 20 mit Hilfe einer Leitung 22 angeschlossen. Die Spracheinheit 20 ist beispielsweise eine Kopfhörer-Mikrofon-Kombination, mit der Sprachsignale in den Rechner 18 eingegeben und mit der vom Rechner 18 erzeugte Sprachsignale hörbar gemacht werden.

Das Telefon 16 und der Rechner 18 sind an die Anschlußbaugruppe 14 über dieselbe Leitung 24 angeschlossen. Als Übertragungstechnik wird die oben erwähnte UADSL-Technik eingesetzt. Als Übertragungsstrecke 26 für die vom bzw. zum Telefon 16 zu übertragenden Daten wird ein unterer Frequenzbereich verwendet, in dem die Daten gemäß PCM-Standard (Pulse Code Modulation) übertragen werden. Als Übertragungsstrecke 28 für die Übertragung von Daten zwischen dem Rechner 18 und der Anschlußbaugruppe 14 wird ein höherer Frequenzbereich verwendet.

Gestrichelte Linien deuten Signalisierungsprotokolle zwischen dem Telefon 16 und der Vermittlungsstelle 10 bzw. zwischen dem Rechner 18 und der Vermittlungsstelle 10 an. Als Signalisierungsprotokolle zwischen dem Telefon 16 und der Anschlußbaugruppe 14 wird das Teilnehmer-Signalisierungs-Protokoll E-DSS1 (Euro-Digital Signalling System One) verwendet. Bei Telefonen mit Analogtechnik werden Signalisierungssignale durch geeignete Schaltungen im Telefon erzeugt, z.B. durch Impulsgeber für die Wahlimpulse. Auf der Übertragungsstrecke 28 werden Daten gemäß Internet-Protokoll IP übertragen. Zur Signalisierung wird das Protokoll UDP (User Datagram Protocol) verwendet.

Die Anschlußbaugruppe 14 enthält eine Frequenzweiche mit der die vom Telefon 16 bzw. vom Rechner 18 kommenden Daten getrennt werden. Andererseits werden in der Anschlußbaugruppe 14 die an das Telefon 16 bzw. an den Rechner 18 zu übertragenden Daten auf der Leitung 24 zusammengeführt.

Die Vermittlungsstelle 10 enthält außerdem einen Netzzugangsrechner 32, mit dessen Hilfe Verbindungen zum Internet 34 aufgebaut werden können. Ein in der Vermittlungsstelle 10 enthaltener Netzübergangsrechner 36 ist eine Schnittstelle zwischen dem Internet 34 und dem Fernsprechnetz 11.

Die Steuer- und Vermittlungseinheit 12 ist über einen internen Bus der Vermittlungsstelle 10 mit der Anschlußbaugruppe 14, dem Netzzugangsrechner 32 und dem Netzübergangsrechner 36 verbunden, vgl. Verbindungen 38, 40 und 42. Über eine Verbindungsleitung 44 zwischen der Steuer- und Vermittlungseinheit 12 und einer nicht dargestellten benachbarten Vermittlungsstelle werden Signalisierungsdaten und Nutzdaten übertragen. Als Signalisierungsprotokoll wird auf dieser Leitung das Signalisierungs-Protokoll Nr. 7 gemäß CCITT-Standard (Comité Consultatif International Télégraphique et Téléphonique) verwendet. Die Anschlußbaugruppe 14 ist mit dem Netzzugangsrechner 32 über eine Verbindung 46 verbunden. Der Netzzugangsrechner 32 und der Netzübergangsrechner 36 sind jeweils über Verbindungsleitungen 48 und 50 an das Internet 34 angeschlossen. Gestrichelte Linien entlang der Verbindungen 38 bis 42, der Verbindungsleitung 44, der Verbindung 46 sowie der Leitungen 48, 50 verdeutlichen Signalisierungen. Durchgezogene Linien zeigen den Transport von Nutzdaten. Alle Übertragungsstrecken arbeiten bidirektional, d. h. sowohl die Signalisierungsdaten als auch die Nutzdaten werden in beide Richtungen übertragen.

Die Steuer- und Vermittlungseinheit 12 baut in einer Schaltstellung I eine Verbindung im Fernsprechnetz 11 zum Telefon 16 auf. Dabei werden die Leitung 24, die Anschlußbaugruppe 14, die Verbindung 38 und die Verbindungsleitung 44 zur Übertragung der Sprachdaten verwendet. In einer Schaltstellung II vermittelt die Steuer- und Vermittlungseinheit 12 eine Verbindung zwischen einem Endgerät im Telefonnetz und dem Rechner 18. Für die Verbindung wird der Rechner 18, die Übertragungsstrecke 28, die Anschlußbaugruppe 14, die Verbindung 46, eine Verbindung 52 im Netzzugangsrechner 32, die Leitung 48, das Internet 34, die Leitung 50, der Netzübergangsrechner 36, eine Verbindung 54 in der Steuer- und Vermittlungseinheit 12 sowie die Verbindungsleitung 44 benutzt.

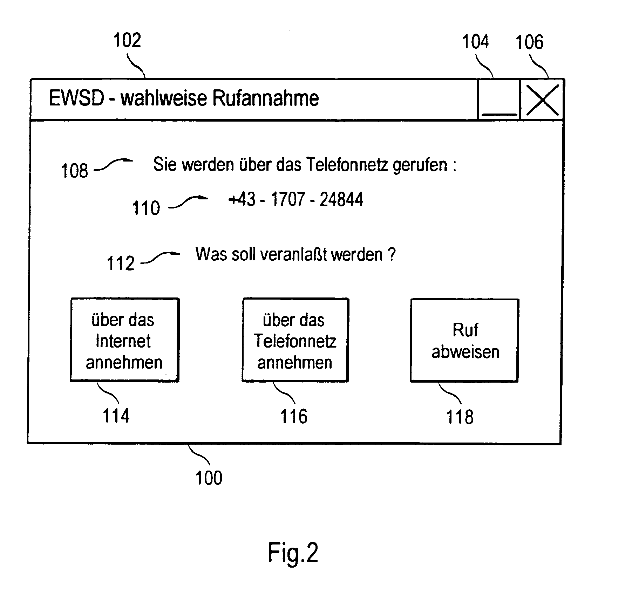

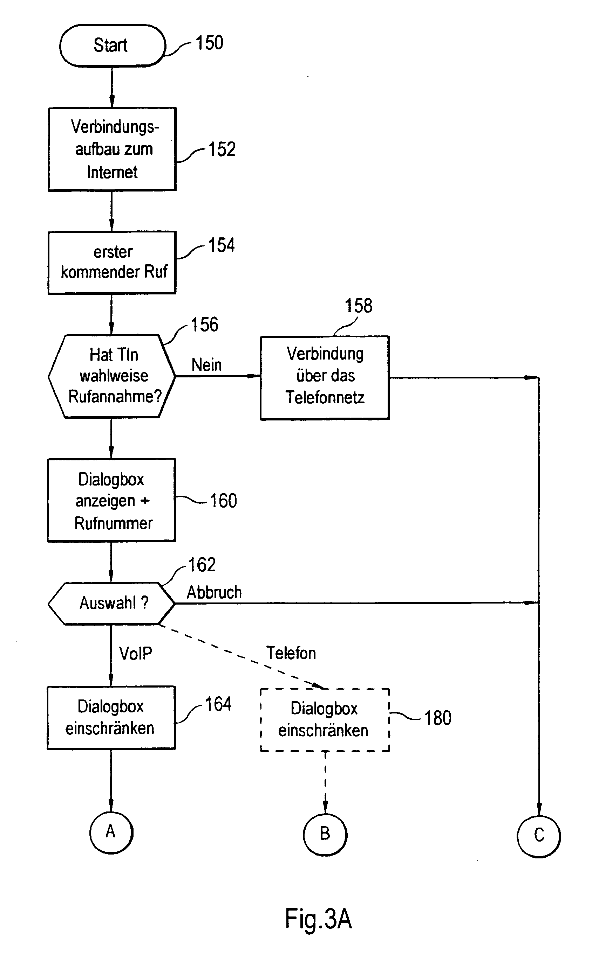

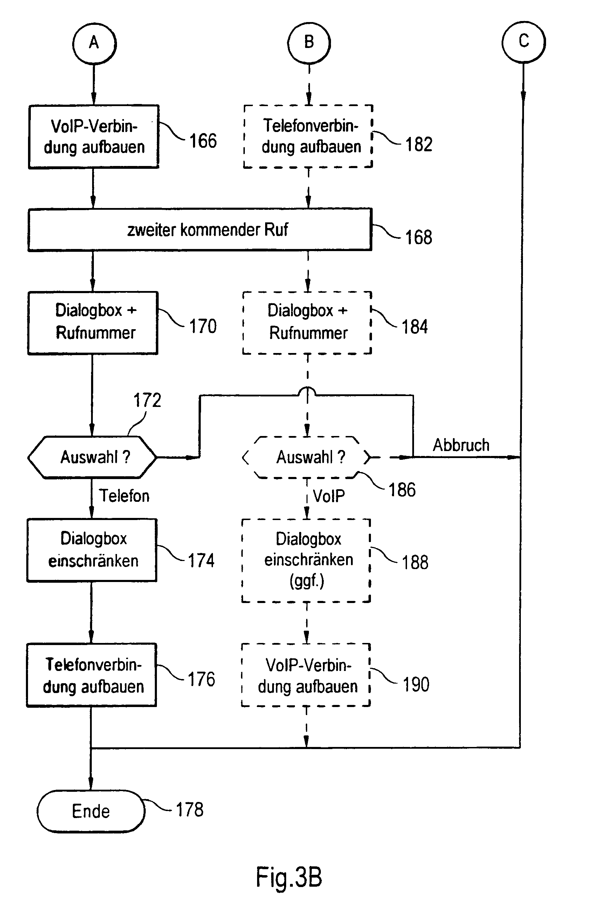

Das Auswählen der Schaltstellung I bzw. II wird unten anhand der Figuren 2, 3A und 3B erläutert. Bezüglich der Einzelheiten der Signalisierungsvorgänge beim Verbindungsaufbau über die Schaltstellung I bzw. II wird auf die oben genannten Signalisierungs-Protokolle verwiesen.

Figur 2 zeigt eine Dialogbox 100, die vor einem Verbindungsaufbau zum Teilnehmer TlnB auf einer Anzeigeeinheit des Rechners 18 dargestellt wird. Die Dialogbox 100 enthält eine Titelleiste 102, ein Verkleinern-Feld 104, ein Schließen-Feld 106, Textzeilen 108, 110 und 112 sowie Schaltflächen 114, 116 und 118.

Die Titelleiste 102 enthält einen Hinweis auf die verwendete Vermittlungsstelle 10 sowie auf das Leistungsmerkmal, das durch die Dialogbox 100 betroffen ist, nämlich "EWSD - wahlweise Rufannahme" (elektronisch gesteuertes digitales Wählsystem der Firma SIEMENS AG). Das Verkleinern-Feld 104 bewirkt beim Anklicken mit einer Computer-Maus, daß die Dialogbox 108 am unteren Bildschirmrand verkleinert dargestellt wird. Das Schließen-Feld 106 dient zum Schließen der Dialogbox 100. Die Textzeile 108 weist den Leser, d. h. den Teilnehmer TlnB, darauf hin, daß er über das Telefonnetz von einem anderen Teilnehmer TlnA (nicht dargestellt) gerufen wird. In der Textzeile 110 ist die Rufnummer des anrufenden Teilnehmers TlnA dargestellt, hier die Rufnummer "+43-1707-24844". Der in der Textzeile 112 dargestellte Text ist eine Anfrage, was als nächster Schritt veranlaßt werden soll. Betätigt der Teilnehmer TlnB die Schaltfläche 114, so wird das ankommende Gespräch über das Internet 34, vgl. Figur 1, entgegengenommen. Betätigt der Teilnehmer TlnB dagegen die Schaltfläche 116, so wird der ankommende Ruf über das Fernsprechnetz 11 aufgebaut, d. h. daß das Telefon 16 verwendet wird. Die Schaltfläche 118 wird vom Teilnehmer TlnB betätigt, wenn er den ankommenden Ruf abweisen möchte.

Die Fig. 3A und 3B zeigen ein Flußdiagramm mit Verfahrensschritten für ein Verfahren zum wahlweisen Annehmen eines Rufes über das Internet 34 oder über das Fernsprechnetz 11, vgl. Figur 1. Das Verfahren beginnt in einem Verfahrensschritt 150. In einem folgenden Verfahrensschritt 152 baut der Teilnehmer TlnB eine Internetverbindung zum Netzzugangsrechner 32 auf. Im Netzzugangsrechner 32 ist eine Internetadresse IP-ADR gespeichert, unter der der Teilnehmer TlnB im Internet 34 erreichbar ist. Diese Internetadresse IP-ADR ist beispielsweise anzugeben, wenn an den Teilnehmer TlnB ein elektronischer Brief gesendet wird. Bei einer Telefonverbindung über das Internet ist die Internetadresse IP-ADR ebenfalls anzugeben.

Die Internetadresse IP-ADR wird vom Netzzugangsrechner 32 zur Steuer- und Vermittlungseinheit 12 über die Verbindung 40 signalisiert. Beim Einrichten des Leistungsmerkmals "wahlweise Rufannahme" wird angegeben, daß die Rufnummer des Teilnehmers TlnB und die Internetadresse IP-ADR dieses Teilnehmers TlnB für das Leistungsmerkmal verwendet werden sollen. Die Rufnummer und die Internetadresse des Teilnehmers TlnB bleiben in der Steuer- und Vermittlungseinheit 12 gespeichert.

In einem Verfahrensschritt 154 wird von einer benachbarten Vermittlungsstelle aus über die Verbindungsleitung 44 eine Rufanforderung signalisiert. In der Anforderung ist als Zielrufnummer die Rufnummer des Teilnehmers TlnB angegeben. Der ankommende Ruf wird im folgenden auch als erster Ruf bezeichnet.

In einem Verfahrensschritt 156 wird durch die Steuereinheit 12 geprüft, ob der in der Anforderung angegebene Teilnehmer TlnB das Dienstmerkmal "wahlweise Rufannahme" eingerichtet hat. Zum Einrichten wurde beispielsweise das Verfahren ISCI (Internet Subscriber Controlled Input) verwendet. Hat der Teilnehmer TlnB das Dienstmerkmal "wahlweise Rufannahme" nicht eingerichtet, so wird durch die Steuer- und Vermittlungseinheit 12 eine durchschaltevermittelte Telefonverbindung über die Schaltstellung I zum Telefon 16 aufgebaut, vgl. Verfahrensschritt 158. Nach dem Ausführen des Verfahrensschritts 158 wird das Verfahren beendet, vgl. den unten erläuterten Verfahrensschritt 178.

Wird dagegen im Verfahrensschritt 156 festgestellt, daß der Teilnehmer TlnB das Dienstmerkmal "wahlweise Rufannahme" eingerichtet hat, so folgt unmittelbar nach dem Verfahrensschritt 156 ein Verfahrensschritt 160. Im Verfahrensschritt 160 wird die Darstellung der Dialogbox 100, vgl. Figur 2, auf einer Anzeigeeinheit des Rechners 18 veranlaßt. Die Steuer- und Vermittlungseinheit 12 signalisiert über die Verbindung 40 dem Netzzugangsrechner 32, daß die Dialogbox 100 dargestellt werden soll. Der Netzzugangsrechner 32 veranlaßt unter Nutzung des oben erwähnten Protokolls UDP die Darstellung der Dialogbox 100 auf der Anzeigeeinheit des Rechners 18. Dabei wird von der Steuer- und Vermittlungseinheit 12 an den Netzzugangsrechner 32 ebenfalls die Rufnummer des rufenden A-Teilnehmers TlnA gesendet. Diese Rufnummer ist in der zu bearbeitenden Anforderung enthalten. Die Rufnummer wird vom Netzzugangsrechner 32 über die Verbindung 46 und die Übertragungsstrecke zum Rechner 18 übertragen und in der Zeile 110 der Dialogbox 100 dargestellt.

In einem folgenden Verfahrensschritt 162 trifft der Teilnehmer TlnB eine Auswahl und betätigt eine der Schaltflächen 114 bis 118. Die Auswahl des Teilnehmers TlnB wird vom Rechner 18 u.a. über die Verbindung 46 zum Netzzugangsrechner 32 und von dort über die Verbindung 40 zur Steuer- und Vermittlungseinheit 12 signalisiert. Dabei wird auf der Leitung 24 das Protokoll UDP verwendet. Betätigt der Teilnehmer TlnB die Schaltfläche 118, so wird das Verfahren beendet ohne den Ruf anzunehmen, vgl. Verfahrensschritt 178. Wird dagegen die Schaltfläche 114 betätigt, so folgt unmittelbar nach dem Verfahrensschritt 162 ein Verfahrensschritt 164.

Im Verfahrensschritt 164 wird die Schaltfläche 114 gesperrt, so daß sie vorerst nicht mehr betätigt werden kann. Das Sperren wird bei der Darstellung der Dialogbox 100 durch einen bestimmten Grauton der Schaltfläche 114 angezeigt.

Nach dem Verfahrensschritt 164 wird in einem Verfahrensschritt 166 durch die Steuer- und Vermittlungseinheit 12 der Aufbau einer Sprachverbindung über das Internet veranlaßt. Als Verbindungsziel wird die zur Rufnummer des Teilnehmers TlnB gehörende Internetadresse IP-ADR angegeben. Der Netzübergangseinheit 36 wird über die Verbindung 42 signalisiert, daß eine Verbindung zwischen dem Fernsprechnetz 11 und dem Internet 34 geschaltet werden soll. Nachdem festgestellt worden ist, daß die Netzübergangseinheit 36 noch freie Betriebsmittel hat, wird über die Schaltstellung II die Verbindung zur Netzübergangseinheit 36 geschaltet. In der Netzübergangseinheit 36 werden die in Sprachkanälen übertragenen Sprachdaten auf Datenpakete aufgeteilt und gemäß Internetprotokoll zum Internet 34 weitergeleitet. Vom Internet 34 gelangen die paketierten Sprachdaten zum Netzzugangsrechner 32, da vor dem Verbindungsaufbau im Internet die Internetadresse IP-ADR des Teilnehmers TlnB als Verbindungsziel angegeben wurde. Der Netzzugangsrechner 32 leitet die paketierten Sprachdaten über die Verbindung 52 zum Rechner 18 weiter. Im Rechner 18 werden die Sprachdaten mit Hilfe der Spracheinheit 20 ausgegeben. Sprache des Teilnehmers TlnB gelangt über die Spracheinheit 20, den Rechner 18 usw, in umgekehrter Richtung zur Netzübergangseinheit 36 und von dort zum entfernten Teilnehmer TlnA (nicht dargestellt) im Fernsprechnetz 11.

In einem Verfahrensschritt 168 wird auf der Verbindungsleitung 44 eine weitere Anforderung für einen zweiten kommenden Ruf empfangen, der die Rufnummer des Teilnehmers TlnB enthält. In einem folgenden Verfahrensschritt 170 wird, wie oben bereits für den Verfahrensschritt 160 erläutert, die Anzeige der Dialogbox 100 auf der Anzeigeeinheit des Rechners 18 veranlaßt. Der Teilnehmer TlnB hat nur noch die Möglichkeit, die Schaltfläche 116 oder 118 zu betätigen. In der Textzeile 110 wird nun die Rufnummer des zweiten rufenden Teilnehmers angezeigt. Entscheidet sich der Teilnehmer TlnB für eine Abweisung des zweiten Rufes, so betätigt er in einem Verfahrensschritt 172 die Schaltfläche 118. Das Verfahren wird beendet, vgl. Verfahrensschritt 178. Betätigt der Teilnehmer TlnB dagegen im Verfahrensschritt 172 die Schaltfläche 116, so folgt unmittelbar ein Verfahrensschritt 174.

Im Verfahrensschritt 174 veranlaßt die Steuer- und Vermittlungseinheit 12 unter Einbeziehung des Netzzugangsrechners 32, daß auch die Schaltfläche 116 gesperrt und grau unterlegt dargestellt wird, wenn die Dialogbox 100 das nächste Mal angezeigt wird.

Aufgrund der Auswahl des Teilnehmers TlnB im Verfahrensschritt 172 wird in einem Verfahrensschritt 176 für den zweiten kommenden Ruf eine Telefonverbindung aufgebaut. Diese Verbindung wird über die Schaltstellung I zum Telefon 16 geschaltet.

In einem folgenden Verfahrensschritt 178 wird das Verfahren beendet. Nach dem Abbau der aufgrund des ersten Rufes zustande gekommenen Verbindung wird die Schaltfläche 114 wieder freigegeben. Ebenso wird nach dem Abbau der durch den zweiten Ruf veranlaßten Verbindung die Schaltfläche 116 wieder freigegeben. Somit hat der Teilnehmer TlnB bei weiteren ankommenden Rufen die Möglichkeit, eine Sprachverbindung über das Internet 34 bzw. über das Fernsprechnetz 11 aufzubauen.

Entscheidet sich der Teilnehmer TlnB im Verfahrensschritt 162 jedoch dafür, die Schaltfläche 116 zu betätigen, so folgt unmittelbar nach dem Verfahrensschritt 162 ein Verfahrensschritt 180, in welchem die Schaltfläche 116 gesperrt wird. Nach dem Verfahrensschritt 180 folgt ein Verfahrensschritt 182.

Im Verfahrensschritt 182 wird zunächst eine Telefonverbindung über das Fernsprechnetz 11 geschaltet. Das bedeutet, daß die Verbindung über die Schaltstellung I zum Telefon 16 aufgebaut wird.

Trifft im Verfahrensschritt 168 der zweite ankommende Ruf an der Vermittlungsstelle 10 ein, so wird in einem Verfahrensschritt 184 die Dialogbox 100 dargestellt. Dabei ist die Schaltfläche 116 gesperrt. Drückt der Teilnehmer TlnB in einem Verfahrensschritt 186 die rechte Schaltfläche, d. h. die Schaltfläche 118, so wird das Verfahren beendet, vgl. Verfahrensschritt 178. Damit wird der zweite kommende Ruf nicht angenommen.

Betätigt der Teilnehmer TlnB dagegen im Verfahrensschritt 186 die Schaltfläche 114, so wird in einem unmittelbar folgenden Verfahrensschritt 188 diese Schaltfläche deaktiviert, falls nicht mehr als eine Sprachverbindung über das Internet 34 zum Teilnehmer TlnB aufgebaut werden soll. In einem folgenden Verfahrensschritt 190 wird der Aufbau einer Sprachverbindung über das Internet 34 veranlaßt. Dabei wird über die Schaltstellung II eine Verbindung zum Rechner 18 aufgebaut.

## Patentansprüche

1. Verfahren zum Verbindungsaufbau,
bei dem eine Vermittlungseinrichtung (10) in einem ersten Übertragungsnetz (11) gemäß einer ersten Übertragungsart übertragene Daten zwischen Teilnehmern (TlnA, TlnB) vermittelt,
an die Vermittlungseinrichtung (10) ein erstes Endgerät (16) über eine Anschlussstrecke (24) angeschlossen ist,
und bei dem über dieselbe Anschlussetrecke (24) ein zweites Endgerät (18) angeschlossen ist, mit dem Daten gemäß einer von der ersten Übertragungsart abweichenden zweiten Übertragungsart in einem zweiten Datenübertragungsnetz (34) übertragen werden,
wobei das erste Endgerät (16) über eine erste durch ein unteres Frequenzband repräsentierte Übertragungsstrecke (26) der Anschlussstrecke (24) an die Vermittlungseinrichtung (10) angeschlossen wird, und
das zweite Endgerät (18) über eine zweite durch ein höheres Frequenzband repräsentierte Übertragungsstrecke (28) der Anschlussstrecke (24) an die Vermittlungseinrichtung (10) angeschlossen wird,
**dadurch gekennzeichnet,**
**dass** beim Bearbeiten einer Anforderung für den Verbindungsaufbau zum ersten Endgerät (16) eine Steuereinheit (12) der Vermittlungseinrichtung (10) ein Verbindungsziel (IP-ADR) ermittelt, über das das zweite Endgerät (18) im zweiten Übertragungsnetz (34) über die zweite Übertragungsstrecke (28) erreichbar ist,
und **dass** beim Bearbeiten der Anforderung mit Hilfe des Verbindungsziels (IP-ADR) eine Verbindung zum zweiten Endgerät (18) über die zweite Übertragungsstrecke (28) aufgebaut wird.

2. Verfahren nach Anspruch 1, **dadurch gekennzeichnet, dass** mit Hilfe der Verbindung zum zweiten Endgerät (18) eine Anfrage (100) gestellt wird, ob eine Verbindung und/oder über welches Übertragungsnetz (11, 34) eine Verbindung aufgebaut werden soll.

3. Verfahren nach Anspruch 1 oder 2, **dadurch gekennzeichnet, dass** mit Hilfe der Verbindung zum zweiten Endgerät (18) eine Verbindung zu einem Endgerät aufgebaut wird, das die Anforderung erzeugt hat.

4. Verfahren nach einem der vorhergehenden Ansprüche, **dadurch gekennzeichnet, dass** die Steuereinheit (12) zunächst prüft, ob eine Bedingung für die Einbeziehung des zweiten Endgeräts (18) erfüllt ist,
und dass die Verbindung zum zweiten Endgerät (18) nur dann aufgebaut wird, wenn die Bedingung erfüllt ist.

5. Verfahren nach Anspruch 1, **dadurch gekennzeichnet, dass** eines der Übertragungsnetze (11) ein durchschaltevermittelndes Übertragungsnetz zur Sprachübertragung und daß das andere Übertragungsnetz (34) ein Übertragungsnetz ist, in welchem Daten in Datenpaketen übertragen werden.

6. Verfahren nach einem der vorhergehenden Ansprüche, **dadurch gekennzeichnet, dass** über die Anschlussstrecke (24) Daten breitbandig, insbesondere mit Hilfe einer xDSL-Technik, übertragen werden.

7. Vermittlungseinrichtung (10) für den wahlweisen Verbindungsaufbau,
mit einer ersten Anschlusseinheit zum Anschluss eines ersten Übertragungsnetzes (11), in welchem Daten gemäß einer ersten Übertragungsart übertragen werden,
einer zweiten Anschlusseinheit (14) zum Anschluss einer Anschlussstrecke (24) für ein erstes Endgerät (16) und ein zweites Endgerät (18),
wobei das erste Endgerät (16) über eine erste durch ein unteres Frequenzband repräsentierte Übertragungsstrecke (26) der Anschlussstrecke (24) angeschlossen ist, und das zweite Endgerät (18) über eine zweite ein höheres Frequenzband repräsentierende Übertragungsstrecke (28) der Anschlussstrecke (24) angeschlossen ist,
und mit einer Steuereinheit (12) zum Bearbeiten von Anforderungen für den Verbindungsaufbau zum ersten Endgerät (16) über die erste Übertragungsstrecke (26),
**dadurch gekennzeichnet, dass** die Steuereinheit (12) Mittel zum Ermitteln eines Verbindungsziels (IP-ADR) enthält, die beim Bearbeiten einer Anforderung für den Verbindungsanfbau zum ersten Endgerät (16) das Verbindungsziel (IP-ADR) ermitteln, über das das zweite Endgerät (18) erreichbar ist, das Daten gemäß einer von der ersten Übertragungsart abweichenden zweiten Übertragungsart in einem zweiten Übertragungsnetz (34) überträgt,
und dass die Vermittlungseinrichtung (10) Mittel zum Aufbau einer Verbindung zum zweiten Endgerät (18) enthält, die die Verbindung mit Hilfe des Verbindungsziels (IF-ADR) aufbauen.

8. Vermittlungseinrichtung (10) nach Anspruch 7, **da** - **durch gekennzeichnet**, dass die zweite Anschlusseinheit (14) außerdem zum Anschluss des zweiten Endgerätes (18) dient, welches unter dem ermittelten Verbindungsziel (IP-ADR) erreichbar ist.

9. Vermittlungseinrichtung (10) nach Anspruch 7 oder 8,
**gekennzeichnet durch** eine Netzübergangseinheit (36), die das erste Übertragungsnetz (11) und das zweite Übertragungsnetz (34) verbindet.

10. Vermittlungseinrichtung (10) nach einem der Ansprüche 7 bis 9, **gekennzeichnet durch** eine Netzzugangeinheit (32) für den Zugang vom zweiten Endgerät (18) zum zweiten Übertragungsnetz (34).

11. Vermittlungseinrichtung (10) nach einem der Ansprüche 7 bis 10, **dadurch gekennzeichnet, dass** die zweite Anschlusseinheit (14) gemäß einem Verfahren arbeitet, bei dem Daten breitbandig übertragen werden, insbesondere über eine Kupferdoppelader.

12. Programm für den Verbindungsaufbau,
mit einer durch den Prozessor einer Vermittlungseinrichtung (10) in einem ersten Übertragungsnetz (11) ausführbaren Befehlsfolge, **dadurch gekennzeichnet, dass** die Vermittlungseinrichtung (10) beim Ausführen der Befehlsfolge veranlasst wird, die in einem der Ansprüche 1 bis 6 genannten Verfahrensschritte auszuführen.

## Claims

1. Method for setting up a connection, in which a switching device (10) switches data, transmitted in a first transmission network (11) according to a first transmission method, between subscribers (TlnA, TlnB), a first terminal (16) is connected to the switching device (10) via a connection route (24), and in which a second terminal (18), by means of which data is transmitted in a second data transmission network (34) according to a second transmission method which differs from the first transmission method, is connected via the same connection route (24), the first terminal (16) being connected to the switching device (10) via a first transmission route (26), represented by a relatively low frequency band, of the connection route (24), and the second terminal (18) being connected to the switching device (10) via a second transmission route (28), represented by a relatively high frequency band, of the connection route (24), **characterized in that**, during the processing of a request for the setting up of a connection to the first terminal (16), a control unit (12) of the switching device (10) determines a connection destination (IP-ADR) via which the second terminal (18) can be reached in the second transmission network (34) via the second transmission route (28), and **in that**, during the processing of the request, a connection is set up to the second terminal (18) via the second transmission route (28) using the connection destination (IP-ADR).

2. Method according to Claim 1, **characterized in that**, using the connection to the second terminal (18), an enquiry (100) is made as to whether a connection is to be set up and/or via which transmission network (11, 34) a connection is to be set up.

3. Method according to Claim 1 or 2, **characterized in that**, using the connection to the second terminal (18), a connection is set up to a terminal which has generated the request.

4. Method according to one of the preceding claims, **characterized in that** the control unit (12) firstly checks whether a condition for the involvement of the second terminal (18) is fulfilled, and **in that** the connection to the second terminal (18) is set up only if the condition is fulfilled.

5. Method according to Claim 1, **characterized in that** one of the transmission networks (11) is a through-switching transmission network for voice transmission and **in that** the other transmission network (34) is a transmission network in which data is transmitted in data packets.

6. Method according to one of the preceding claims, **characterized in that** data is transmitted over the connection route (24) in broadband fashion, in particular using an xDSL technology.

7. Switching device (10) for optionally setting up a connection, with a first connection unit for connecting a first transmission network (11) in which data is transmitted according to a first transmission method, a second connection unit (14) for connecting a connection route (24) for a first terminal (16) and for a second terminal (18), the first terminal (16) being connected via a first transmission route (26), represented by a relatively low frequency band, of the connection route (24), and the second terminal (18) being connected via a second transmission route (26), represented by a relatively high frequency band, of the connection route (24), and having a control unit (12) for processing requests for the setting up of a connection to the first terminal (16), via the first transmission route (26), **characterized in that** the control unit (12) contains means for determining a connection destination (IP-ADR) which, during the processing of a request for setting up a connection to the first terminal (16), determine the connection destination (IP-ADR) via which the second terminal (18), which transmits data in a second transmission network (34) according to a second transmission method which differs from the first transmission method, can be reached, and **in that** the switching device (10) contains means for setting up a connection to the second terminal (18) which set up the connection using the connection destination (IP-ADR).

8. Switching device (10) according to Claim 7, **characterized in that** the second connection unit (14) is also used to connect the second terminal (18) which can be reached at the connection destination (IP-ADR) which is determined.

9. Switching device (10) according to Claim 7 or 8, **characterized by** a network gateway (36) which connects the first transmission network (11) and the second transmission network (34).

10. Switching device (10) according to one of Claims 7 to 9, **characterized by** a network access unit (32) for the access by the second terminal (18) to the second transmission network (34).

11. Switching device (10) according to one of Claims 7 to 10, **characterized in that** the second connection unit (14) operates according to a method in which data is transmitted in broadband fashion, in particular over a copper double conductor.

12. Program for setting up a connection, having an instruction sequence which can be executed by the processor of a switching device (10) in a first transmission network (11), **characterized in that**, when the instruction sequence is executed, the switching device (10) is made to execute the method steps mentioned one of Claims 1 to 6.

## Revendications

1. Procédé pour établir une liaison, dans lequel :
- un dispositif de commutation (10) commute, dans un premier réseau de transmission (11), des données transmises selon un premier mode de transmission entre des usagers (TlnA, TlnB) ;
- un premier terminal (16) est connecté au dispositif de commutation (10) via un trajet de connexion (24) ; et
- via le même trajet de connexion (24) est connecté un deuxième terminal (18) au moyen duquel des données sont transmises dans un deuxième réseau de transmission de données (34) selon un deuxième mode de transmission différent du premier mode de transmission ;
- le premier terminal (16) étant connecté au dispositif de commutation (10) via un premier trajet de transmission (26) du trajet de connexion (24) représenté par une bande de fréquence inférieure ; et
- le deuxième terminal (18) étant connecté au dispositif de commutation (10) via un deuxième trajet de transmission (28) du trajet de connexion (24) représenté par une bande de fréquence supérieure ;
**caractérisé en ce que** :
- lors du traitement d'une requête d'établissement de liaison vers le premier terminal (16), une unité de commande (12) du dispositif de commutation (10) détermine une destination de liaison (IP-ADR) via laquelle le deuxième terminal (18) est joignable dans le deuxième réseau de transmission (34) via le deuxième trajet de transmission (28) ; et
- lors du traitement de la requête, une liaison vers le deuxième terminal (18) est établie via le deuxième trajet de transmission (28) à l'aide de la destination de la liaison (IP-ADR).

2. Procédé selon la revendication 1, **caractérisé en ce qu'**est faite, à l'aide de la liaison vers le deuxième terminal (18), une requête (100) demandant s'il faut établir une liaison et/ou via quel réseau de transmission (11, 34) il faut établir une liaison.

3. Procédé selon la revendication 1 ou 2, **caractérisé en ce qu'**est établie, à l'aide de la liaison vers le deuxième terminal (18), une liaison vers un terminal qui a généré la requête.

4. Procédé selon l'une des revendications précédentes, **caractérisé en ce que** l'unité de commande (12) vérifie tout d'abord si une condition de prise en compte du deuxième terminal (18) est remplie et **en ce que** la liaison vers le deuxième terminal (18) n'est établie que si la condition est remplie.

5. Procédé selon la revendication 1, **caractérisé en ce que** l'un des réseaux de transmission (1) est un réseau de transmission à commutation de circuits pour la transmission vocale et **en ce que** l'autre réseau de transmission (34) est un réseau de transmission dans lequel des données sont transmises dans des paquets de données.

6. Procédé selon l'une des revendications précédentes, **caractérisé en ce que** des données sont transmises en large bande sur le trajet de connexion (24), et plus particulièrement à l'aide d'une technique xDSL.

7. Dispositif de commutation (10) pour établir une liaison au choix, avec :
- une première unité de connexion pour connecter un premier réseau de transmission (11) dans lequel des données sont transmises selon un premier mode de transmission ;
- une deuxième unité de connexion (14) pour connecter un trajet de connexion (24) pour un premier terminal (16) et un deuxième terminal (18) ;
- le premier terminal (16) étant connecté via un premier trajet de transmission (26) du trajet de connexion (24) représenté par une bande de fréquence inférieure et le deuxième terminal (18) étant connecté via un deuxième trajet de transmission (28) du trajet de connexion (24) représentant une bande de fréquence supérieure ; et avec
- une unité de commande (12) pour traiter des requêtes d'établissement de liaison vers le premier terminal (16) via le premier trajet de transmission (26) ;
**caractérisé en ce que** :
- l'unité de commande (12) comporte des moyens pour déterminer une destination de liaison (IP-ADR) qui, lors du traitement d'une requête d'établissement de liaison vers le premier terminal (16), déterminent la destination de la liaison (IP-ADR) via laquelle est joignable le deuxième terminal (18) qui transmet des données dans un deuxième réseau de transmission (34) selon un deuxième mode de transmission différent du premier mode de transmission ; et
- le dispositif de commutation (10) comporte des moyens pour établir une liaison vers le deuxième terminal (18), lesquels établissent la liaison à l'aide de la destination de la liaison (IP-ADR).

8. Dispositif de commutation (10) selon la revendication 7, **caractérisé en ce que** la deuxième unité de connexion (14) sert en outre à la connexion du deuxième terminal (18) qui est joignable à la destination de la liaison déterminée (IP-ADR).

9. Dispositif de commutation (10) selon la revendication 7 ou 8, **caractérisé par** une unité de jonction de réseaux (36) qui relie le premier réseau de transmission (11) et le deuxième réseau de transmission (34).

10. Dispositif de commutation (10) selon l'une des revendications 7 à 9, **caractérisé par** une unité d'accès de réseau (32) pour l'accès du deuxième terminal (18) au deuxième réseau de transmission (34).

11. Dispositif de commutation (10) selon l'une des revendications 7 à 10, **caractérisé en ce que** la deuxième unité de connexion (14) fonctionne selon un procédé dans lequel des données sont transmises en large bande, et plus particulièrement via un double fil de cuivre.

12. Programme d'établissement de liaison, avec une suite d'ordres exécutables par le processeur d'un dispositif de commutation (10) dans un premier réseau de transmission (11), **caractérisé en ce que** le dispositif de commutation (10), lors de l'exécution de la suite d'ordres, se voit obligé d'exécuter les étapes du procédé visées dans l'une des revendications 1 à 6.
